# FASCICULE DE BREVET EUROPEEN

(11) **EP 4 296 036 B1**
(45) Date de publication et mention de la délivrance du brevet: **22.01.2025**
(21) Numéro de dépôt: 23175250.2
(22) Date de dépôt: 25.05.2023
(51) Int. Cl.: B29C 49/42, B29C 49/06, B29K 67/00, B29L 31/00

(54) **DISPOSITIF D'ALIMENTATION DE PREFORMES**
VORRICHTUNG ZUM ZUFÜHREN VON VORFORMLINGEN
DEVICE FOR SUPPLYING PREFORMS

(30) Priorité: 21.06.2022 FR 2206100
(43) Date de publication de la demande: 27.12.2023
(73) Titulaire: Sidel Participations, 76930 Octeville-sur-Mer (FR)
(72) Inventeur: DUCLOS, Yves-Alban, 76930 OCTEVILLE-SUR-MER (FR)
(74) Mandataire: Sidel Group

(56) Documents cités:
- US-A1- 2004 109 747
- US-A1- 2010 108 473
- US-A1- 2018 086 570
- US-A1- 2022 063 170

## Description

### Domaine technique de l'invention

L'invention concerne un dispositif d'alimentation de préformes, notamment de préformes en matériau thermoplastique destinées à être conformées en récipients, adapté pour des préformes comportant une collerette, le dispositif comportant :
- une première source de préformes ;
- une première glissière de défilement des préformes comportant deux rails de glissement destinés à supporter les préformes debout par leur collerette, la première glissière de défilement étant alimentée par la première source de préformes, et étant inclinée de manière que les préformes se déplacent vers l'aval sous l'effet de la gravité ;
- une roue d'alimentation rotative sur un bâti fixe du dispositif d'alimentation qui comporte des encoches de réception d'une préforme qui sont réparties à sa périphérie et dont chacune est configurée pour recevoir une préforme arrivant par une extrémité aval de la première glissière de défilement orientée tangentiellement à la roue d'alimentation en un point de tangence.

De tels dispositifs et procédés selon l'art antérieur sont décrits dans les documents US2010/108473A1 et US2022/063170A1. U

### Arrière-plan technique

Le dispositif d'alimentation est destiné à être mis en oeuvre dans une installation de soufflage de récipients en matériau thermoplastique, tel que du polyéthylène téréphtalate (PET).

Selon une technique bien connue, de tels récipients sont produits en deux étapes principales. Dans une première étape, on procède au moulage par injection d'une préforme en matériau thermoplastique. Cette préforme comporte un corps sensiblement tubulaire qui est fermé à l'une de ses extrémités axiales. Son autre extrémité présente, dès cette opération de moulage par injection, la forme définitive du col du récipient. Généralement, le col du récipient comporte un filetage et, à sa base, une collerette de support annulaire qui s'étend radialement en saillie vers l'extérieur par rapport au col et par rapport au col.

Il existe des machines dans lesquelles les préformes sont directement transmises vers la machine de soufflage juste après leur moulage par injection, chaque préforme étant transportée individuellement.

Toutefois, dans de nombreux cas, les préformes sont fabriquées par injection en un premier endroit et sont moulées par soufflage à la forme définitive du récipient en un second endroit sur une machine de soufflage spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes, tandis que transporter des récipients après soufflage présente l'inconvénient d'être économiquement peu rentable du fait du volume très important des récipients.

Dans le cas où la machine d'injection et la machine de soufflage sont deux machines totalement indépendantes, la machine de soufflage dispose d'un dispositif d'alimentation en préformes qui est équipé d'un système de démêlage et d'alignement des préformes.

Dans un exemple connu et non limitatif d'un tel système, les préformes sont déversées en vrac dans un bac. Elles sont prélevées de ce bac par un tapis élévateur qui, à son tour, vient déverser les préformes, selon un rythme préétabli, à l'extrémité supérieure de rouleaux orienteurs, aussi appelés rouleaux d'alignement. Ces deux rouleaux d'alignement sont inclinés par rapport à l'horizontale et ils sont sensiblement parallèles l'un à l'autre. Les deux rouleaux sont entraînés en rotation selon des sens opposés, et sont écartés l'un de l'autre de manière à laisser subsister un intervalle qui est de dimension légèrement supérieure à la dimension des corps des préformes, mais de dimension inférieure au diamètre externe de la collerette de support située à la base du col.

Les rouleaux orienteurs sont configurés de telle manière que, sous l'effet de la gravité, les préformes sont forcées entre les deux rouleaux. Ainsi, par simple gravité, chaque préforme tend à se disposer entre les deux rouleaux, de manière à être suspendue par sa collerette entre les rouleaux. Le mouvement de rotation contraire des deux rouleaux assure le placement des préformes debout les unes derrière les autres, et l'inclinaison des rouleaux assure le glissement des préformes le long de l'axe des rouleaux, vers le bas des rouleaux orienteurs où elles sont ensuite récupérées dans une glissière de défilement elle-même reliée à l'installation de soufflage.

La glissière de défilement des préformes comporte une fente longitudinale qui est délimitée transversalement par deux rails parallèles.

Dans la glissière de défilement, les préformes s'accumulent en une file continue. Chaque préforme tend à se disposer debout dans la glissière de défilement, entre les deux rails parallèles, de manière à être suspendue par sa collerette sur les rails. Les rails de la glissière de défilement comportent de nombreux éléments de guidage qui permettent d'assurer que les préformes reçues dans la glissière de défilement conserve un positionnement correct jusqu'à leur arrivée en bas de la glissière de défilement.

A cet effet, les différents éléments de guidage doivent être parfaitement ajustés par rapport aux dimensions de la préforme.

Les installations de fabrication de récipients sont conçues pour pouvoir recevoir des préformes de différents formats. Les éléments de guidage sont montés réglables en position sur la glissière de défilement de manière à pouvoir être adaptés aux différents formats. Lors d'un changement de format de préforme, de nombreux réglages doivent être effectués, notamment pour permettre d'ajuster les éléments de guidage aux dimensions du nouveau modèle de préforme.

Une telle opération de réglage est généralement très chronophage. De plus, une erreur de réglage peut avoir pour conséquence un arrêt de l'installation le temps de rectifier la position des différents éléments de réglage.

De plus, lors d'un changement de format, il est nécessaire de purger le dispositif d'alimentation des préformes du format précédent avant de déverser les préformes du nouveau format dans le réservoir. Une telle opération retarde la remise en service de l'installation de fabrication.

### Résumé de l'invention

L'invention propose un dispositif d'alimentation de préformes comportant une collerette d'alimentation comportant :
- une première source de préformes ;
- une première glissière de défilement des préformes comportant deux rails de glissement destinés à supporter les préformes debout par leur collerette de défilement étant alimentée par la première source de préformes ;
- une roue d'alimentation rotative sur un bâti fixe du dispositif d'alimentation qui comporte des encoches de réception d'une préforme qui sont réparties à sa périphérie et dont chacune est configurée pour recevoir une préforme arrivant par une extrémité aval de la première glissière de défilement orientée tangentiellement à la roue d'alimentation en un point de tangence.

Le dispositif d'alimentation selon l'invention est caractérisé en ce que le dispositif d'alimentation comporte aussi :
- une deuxième source de préformes distincte de la première source de préformes ;
- une deuxième glissière de défilement comportant deux rails de glissement destinés à supporter les préformes debout par leur collerette de défilement étant alimentée par la deuxième source de préformes, une extrémité aval de la deuxième glissière de défilement étant orientée tangentiellement à la roue d'alimentation en un point de tangence.

Selon un autre aspect de l'invention, l'extrémité aval de la première glissière de défilement et l'extrémité aval de la deuxième glissière de défilement débouchent au même point de tangence avec la roue d'alimentation.

Selon un autre aspect de l'invention, la première glissière de défilement et la deuxième glissière de défilement sont chacune amovible, chacune pouvant être montée sur le bâti uniquement lorsque l'autre est démontée afin d'éviter que leurs extrémités aval n'interfèrent.

Selon un autre aspect de l'invention, chacune des première glissière de défilement et deuxième glissière de défilement comporte un support sur lequel les rails de ladite glissière de défilement sont fixés, le support étant destiné à être fixé au bâti d'alimentation, caractérisé en ce que la première glissière de défilement et la deuxième glissière de défilement présentent, dans leurs positions montées respectives, des orientations différentes par rapport à la roue d'alimentation, la deuxième glissière de défilement présentant un coude présentant un angle permet à son extrémité aval de déboucher tangentiellement à la roue d'alimentation.

Selon un autre aspect de l'invention, la deuxième glissière de défilement présente un coude présentant un angle qui permet à son extrémité aval de déboucher tangentiellement à la roue d'alimentation, l'angle dudit coude étant différent de l'angle du coude de la deuxième glissière de défilement.

Selon un autre aspect de l'invention, que chaque glissière de défilement comporte des moyens de fixation rapide par accrochage sur le bâti du dispositif d'alimentation. Selon un autre aspect de l'invention, chaque source de préformes est munie d'un dispositif de blocage associé qui est commandé entre un état fermé qui permet de bloquer les préformes en amont d'une sortie de ladite source de préformes et un état ouvert qui permet aux préformes de glisser vers la glissière de défilement associée en position montée.

Selon un autre aspect de l'invention, le dispositif de blocage est formé par un obstacle commandé entre une position rétractée correspondant à son état ouvert et une position étendue en travers du trajet des préformes correspondant à son état fermé.

Selon un autre aspect de l'invention, la première source de préformes, respectivement la deuxième source de préformes, est susceptible de distribuer des préformes de différents modèles, la première source de préformes, respectivement la deuxième source de préformes, pouvant être adaptée avec plusieurs premières glissières de défilement, respectivement plusieurs deuxièmes glissières de défilement, associées présentant un écartement différent et un coude de même angle.

Selon un autre aspect de l'invention, le dispositif d'alimentation comporte un dispositif de cadencement de la distribution des préformes à la roue d'alimentation au niveau du point de tangence, le dispositif de cadencement étant commun à la première glissière de défilement et à la deuxième glissière de défilement.

Selon un autre aspect de l'invention, les glissières de défilement sont inclinées de manière que les préformes se déplacent vers leur extrémité aval respective sous l'effet de la gravité.

Selon un autre aspect de l'invention, les préformes se déplacent vers l'extrémité aval de chaque glissière de défilement sous l'effet de moyens de poussée des préformes.

L'invention concerne aussi un procédé de changement d'une glissière de défilement d'un dispositif d'alimentation selon l'invention, dans lequel l'une ou l'autre des glissières de défilement est montée sur le dispositif d'alimentation, caractérisé en ce qu'il comporte :
- une première étape de blocage lors de laquelle le dispositif de blocage associé à ladite glissière de défilement montée est commandé dans sa position fermée pour arrêter l'arrivée des préformes de défilement montée a été purgée des préformes qu'elle contient, elle est démontée lors d'une deuxième étape de démontage,
- l'autre glissière de défilement est ensuite montée lors d'une étape de remplacement,
- puis, lors d'une étape de déblocage, le dispositif de blocage associé à la glissière de défilement désormais montée est alors commandé dans sa position ouverte pour permettre aux préformes de glisser vers son extrémité aval.

### Brève description des figures

D'autres caractéristiques et avantages de l'invention apparaitront au cours de la lecture de la description détaillée qui va suivre pour la compréhension de laquelle on se reportera aux dessins annexés brièvement décrite ci-dessous.
La figure 1 [Fig.1] est une vue de côté qui représente schématiquement un dispositif d'alimentation réalisé selon les enseignements de l'invention qui est raccordé à une installation de fabrication de récipients.
La figure 2 [Fig.2] est une vue en coupe verticale selon le plan de coupe 2-2 de la figure 1 qui représente une préforme reçue dans une première glissière de défilement du dispositif d'alimentation de la figure 1.
La figure 3 [Fig.3] est une vue en perspective de la première glissière de défilement du dispositif d'alimentation de la figure 1 lorsqu'elle est démontée.
La figure 4 [Fig.4] est une vue de dessus qui représente le dispositif d'alimentation de la figure 1 lorsqu'il est équipé de sa première glissière de défilement.
La figure 5 [Fig.5] est une vue en perspective qui représente le dispositif d'alimentation dans sa configuration représentée à la figure 4.
La figure 6 [Fig.6] est une vue en perspective d'une deuxième glissière de défilement du dispositif d'alimentation de la figure 1 lorsqu'elle est démontée.
La figure 7 [Fig.7] est une vue de dessus qui représente le dispositif d'alimentation de la figure 1 lorsqu'il est équipé de sa deuxième glissière de défilement.
La figure 8 [Fig.8] est une vue en perspective qui représente le dispositif d'alimentation dans sa configuration représentée à la figure 7.
La figure 9 [Fig.9] est une vue de détail qui représente un dispositif de fixation rapide d'une glissière de défilement à un bâti du dispositif d'alimentation.

### Description détaillée de l'invention

Dans la suite de la description, des éléments présentant une structure identique ou une fonction analogue seront désignés par une même référence.

Dans la suite de la description, on adoptera une direction verticale correspondant ici à la direction de la gravité.

Dans la suite de la description, le terme "intérieur" sera utilisé pour qualifier une face ou un déplacement dirigé transversalement vers la fente 26A, 26B centrale de chaque glissière 16A, 16B de défilement, tandis que le terme "extérieur" qualifiera une direction opposée.

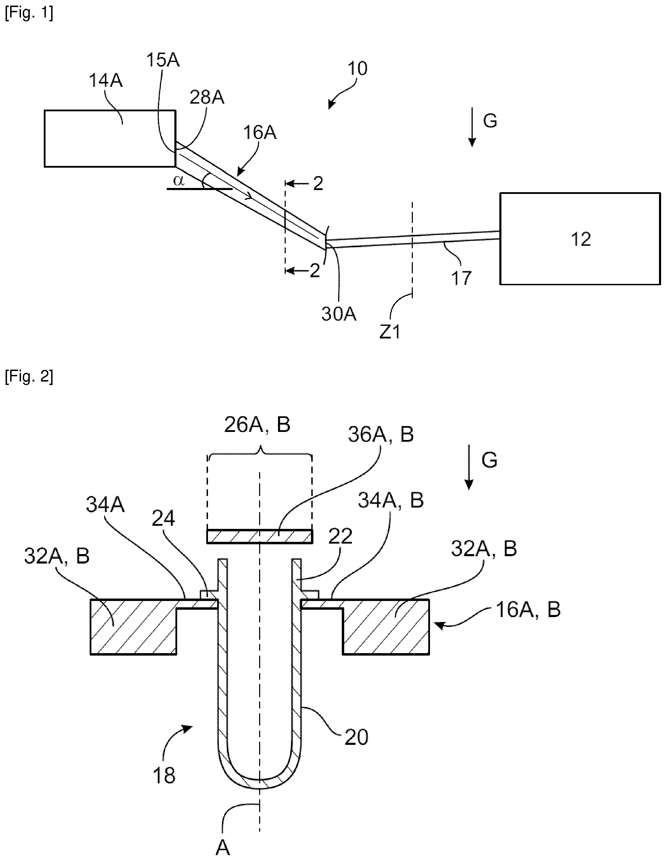

On a représenté à la figure 1 de manière très schématique un dispositif 10 d'alimentation de préformes 18 destiné par exemple à alimenter en préformes 18 une installation 12 de fabrication de récipients par soufflage ou étirage-soufflage des préformes 18. Le dispositif 10 d'alimentation comporte une première source 14A de préformes 18 qui permet de délivrer à la file des préformes 18 orientées col en haut par une sortie 15A. Les préformes 18 sont orientées col en haut et sont alignées en une file de manière à être ensuite délivrées à une première glissière 16A de défilement qui transporte les préformes 18 directement jusqu'à une roue 17 d'alimentation de l'installation 12 de fabrication.

La première source 14A de préformes 18 est approvisionnée en préformes 18 en vrac et elle comporte des moyens pour aligner les préformes et pour les redresser. La première source 14A de préformes 18 comporte par exemple une trémie (non représentée), dans laquelle les préformes18 sont versées en vrac, et un dispositif (non représenté) pour redresser les préformes 18 en une file, tels que des rouleaux orienteurs. Un exemple de tels rouleaux orienteurs est décrit en détails dans le document EP-A1-1.335.870. Des préformes 18 sont ainsi reçues dans la première glissière 16A de défilement.

Selon une variante de réalisation, les préformes sont alignées et redressées par centrifugation. Un tel dispositif pour aligner et redresser les préformes est par exemple décrit en détail dans le document WO-A1 -2016/166459.

La première source 14A peut aussi présenter une glissière similaire à la première glissière 16A de défilement par l'intermédiaire de laquelle les préformes 18 sont acheminées depuis la sortie du dispositif de redressement des préformes 18 jusqu'à la sortie 15A qui débouche dans la première glissière 16A de défilement.

En tous les cas, la première glissière 16A de défilement relie directement la sortie 15A de la première source 14A à la roue 17 d'alimentation.

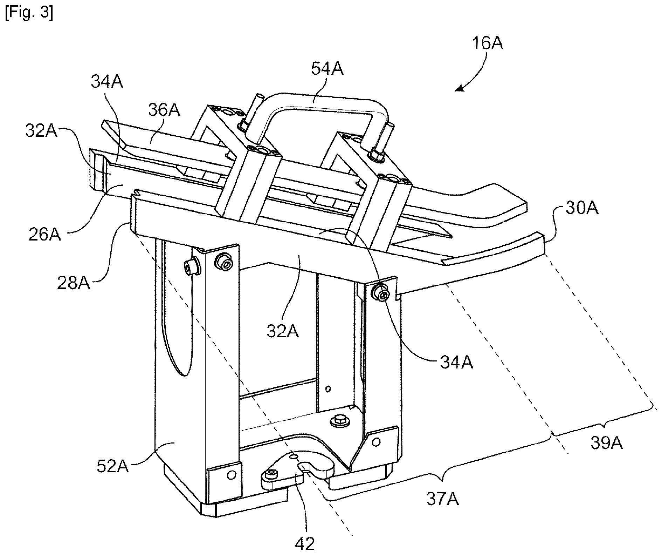

Comme cela est représenté à la figure 2, chaque préforme 18 alimentant l'installation 12 de fabrication présente un corps 20 tubulaire d'axe "A" qui est fermé à son extrémité inférieure. Le corps 20 est ouvert axialement vers le haut par l'intermédiaire d'un col 22 cylindrique qui prolonge le corps 20 vers le haut. Le col 22 présente, à sa jonction avec le corps 20, une collerette 24 qui s'étend radialement en saillie par rapport au tronçon cylindrique du col 22 et par rapport au corps 20. Comme cela est visible aux figures 2 et 3, la première glissière 16A de défilement comporte une fente 26A longitudinale qui s'étend depuis une extrémité 28A amont jusqu'à une extrémité 30A aval de la première glissière 16A de défilement. L'extrémité 28A amont est destinée à être raccordée à la sortie 15A de la première source 14A de préformes 18 lorsque la première glissière 16A de défilement est montée sur le dispositif 10 d'alimentation.

Dans l'exemple non limitatif représenté aux figures l'extrémité 30A aval étant située en contrebas de l'extrémité 28A amont pour permettre aux préformes 18 de glisser vers l'extrémité 30A aval sous l'effet de la gravité. La première glissière 16A de défilement présente une pente "γ" d'inclinaison, par exemple de 15° par rapport à un plan horizontal, comme représenté à la figure 1. Ceci permet aux préformes 18 de glisser sous l'effet de la gravité vers l'extrémité 30A aval inférieure de la première glissière 16A de défilement. Les préformes 18 sont alors mues par la conversion de l'énergie potentielle de la gravité en énergie cinétique.

En variante non représentée de l'invention, la première glissière de défilement est agencée dans un plan horizontal. Les préformes se déplacent alors sous l'effet de moyens de mise en mouvement tels que des dispositifs pneumatiques qui soufflent des jets d'air sur les préformes pour les pousser, ou encore au moyens de brosses rotatives dont les poils poussent les préformes. Dans ce cas, les préformes sont mues par poussée.

La fente 26A est délimitée transversalement par deux rails 32A parallèles destinés à supporter de manière glissante la préforme 18 debout par sa collerette 24. A cet effet, les deux rails 32A présentent un écartement transversal qui est supérieur au diamètre externe du corps 20 des préformes 18, mais qui est inférieur au diamètre externe de la collerette 24.

Optionnellement, la distance d'écartement des deux rails 32A est ajustable par des moyens non représentés pour permettre à la première glissière 16A de défilement de recevoir des séries de préformes 18 de modèles différents présentant des diamètres différents.

Lorsqu'une préforme 18 est reçue par la première glissière 16A de défilement dans une position normale, la collerette 24 de chaque préforme 18 est supportée par deux chemins 34A de glissement formés chacun par une face supérieure bordant intérieurement chaque rail 32A, tandis que le corps 20 de chaque préforme 18 est pendant sous la première glissière 16A de défilement par son poids. Dans cette position, la préforme 18 est dite "debout". Le col 22 de la préforme 18 est ainsi maintenu au-dessus des rails 32A dans un couloir central de défilement des cols 22 comme cela est représenté à la figure 2.

La première glissière 16A de défilement comporte une plaque 36A de guidage qui est agencée au droit de la fente 26A de défilement pour maintenir les préformes 18 défilant en position debout dans la première glissière 16A de défilement par contact avec le bord d'extrémité libre, aussi appelé buvant, du col 22. A cette fin, la plaque 36A de guidage est agencée au-dessus des chemins 34A de glissement des rails 32A, à une distance légèrement supérieure à la hauteur du col 22, avec un jeu vertical suffisant pour permettre le coulissement des préformes 18 debout dans la première glissière 16A de défilement.

L'extrémité 30A aval de la première glissière 16A de défilement débouche sensiblement tangentiellement à la roue 17 d'alimentation en un point "P1" de tangence, comme indiqué par l'axe "X0" des figures.

Le terme "sensiblement tangentiellement", signifie ici que la préforme 18 débouche tout de même légèrement vers l'intérieur de la roue 17 d'alimentation de manière à pouvoir être reçue dans une encoche 38 périphérique de la roue 17 d'alimentation, comme cela sera décrit plus en détail par la suite. Pour éviter de surcharger la rédaction de la description et des revendications, on omettra le terme "sensiblement", le terme "tangent" et ses dérivés signifiant ainsi "sensiblement tangent".

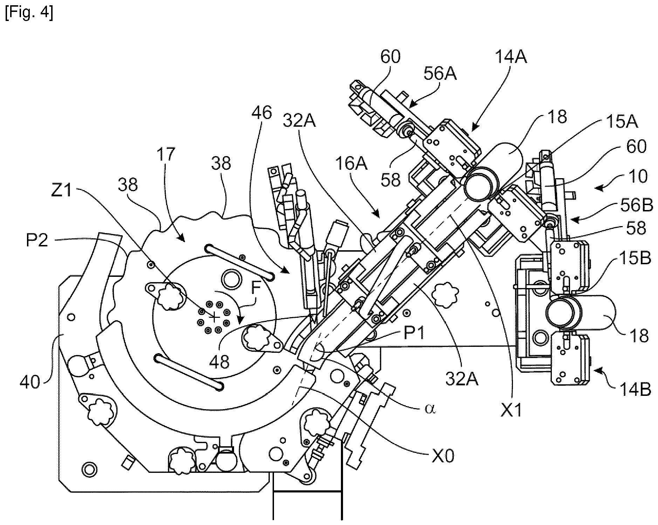

La première glissière 16A de défilement présente ici un tronçon 37A d'extrémité amont de forme rectiligne. L'orientation de ce tronçon 37A d'extrémité amont est indiquée par le trait d'axe "X1" représenté à la figure 4.

Cependant, l'orientation du tronçon d'extrémité amont n'est pas ici tangente à la roue 17 d'alimentation. Pour permettre à l'extrémité 30A aval de la première glissière 16A de défilement de déboucher tangentiellement à la roue 17 d'alimentation, selon la direction "X0", la première glissière 16A de défilement présente donc un coude 39A.

Le coude 39A présente un angle "α" qui permet à l'extrémité 30A aval de la première glissière 16A de défilement de déboucher tangentiellement à la roue 17 d'alimentation, selon la direction "X0". Cet angle "α" est mesuré entre la droite "X1" formée par le tronçon d'extrémité amont rectiligne et l'orientation "X0" avec laquelle les préformes 18 sortent de la première glissière 16A de défilement.

Le coude 39A forme ici un tronçon d'extrémité aval de la première glissière 16A de défilement.

En variante, le coude forme un tronçon intermédiaire de la première glissière de défilement.

Selon encore une autre variante, la première glissière de défilement est entièrement rectiligne et ne comporte pas de coude. Dans ce cas, l'orientation rectiligne de la première glissière de défilement est agencée tangentiellement à la roue 17 d'alimentation.

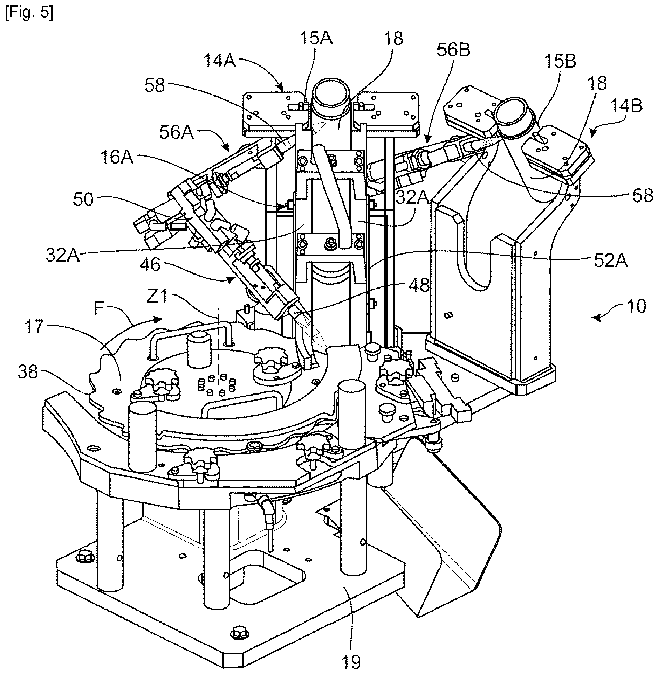

La roue 17 d'alimentation s'étend dans un plan horizontal. Elle est montée rotative par rapport à un bâti 19 du dispositif 10 d'alimentation autour d'un axe "Z1" parallèle à la direction de la gravité "G" selon le sens indiqué par la flèche "F" de la figure 4. Le bâti 19 est fixe par rapport au sol. Comme représenté aux figures 4 et 5, la roue 17 d'alimentation présente à sa périphérie les encoches 38 qui sont adaptées pour recevoir chacune une préforme 18 de manière que la collerette 24 de la préforme 18 soit en appui sur le pourtour de l'encoche 38. L'encoche 38 présente une forme adaptée pour que les préformes 18 arrivent sensiblement tangentiellement à la roue 17 d'alimentation, selon la direction "X0", jusqu'à un fond de l'encoche 38 dans lequel la préforme 18 est arrêtée et maintenue pendant son transport.

Les préformes 18 passent directement de la première glissière 16A de défilement à l'encoche 38 de la roue 17 d'alimentation.

Pour éviter que les préformes 18 ne tombent des encoches 38, par exemple sous l'effet de la force centrifuge, il est prévu un contrerail 40 fixe par rapport au bâti 19 du dispositif 10 d'alimentation. Le contrerail 40 est agencé radialement en vis-à-vis de la périphérie de la roue 17 d'alimentation le long d'un secteur angulaire compris entre le point "P1" de tangence avec la première glissière 16A de défilement et un point "P2" de sortie des préformes 18 vers la prochaine station de l'installation 12 de fabrication, par exemple une station de chauffage des préformes 18. Un espace radial est réservé suffisamment large pour permettre le passage des préformes 18 supportées par les encoches 38, mais suffisamment étroit pour permettre de maintenir les préformes 18 dans les encoches 38.

Le contrerail 40 peut être remplacé par un autre contrerail 40 de rayon de courbure différent, dont le centre coïncide à l'axe "Z" de la roue 17 d'alimentation, afin d'adapter le dispositif 10 d'alimentation à différents modèles de préformes 18 présentant des diamètres différents. Le contrerail 40 est par exemple fixé au moyen de crochets 42 pivotant autour d'un axe "Z2" vertical, chaque crochet 42 étant susceptible d'être accroché à une tige d'une vis 44. La vis 44 est susceptible d'être vissée pour serrer et fixer le crochet 42, et donc le contrerail 40, au bâti 19, ou au contraire dévissée pour desserrer le crochet 42 et permettre son pivotement pour démonter le contrerail 40. La vis 44 présente avantageusement une poignée permettant son vissage et son dévissage à main nue par un opérateur.

En outre, éviter que les préformes 18 ne produisent un embouteillage à la sortie de la première glissière 16A de défilement, il est prévu un dispositif 46 de cadencement de la distribution des préformes 18 à la roue 17 d'alimentation au niveau du point "P1" de tangence.

Le dispositif 46 de cadencement comporte ici un doigt 48 de distribution qui permet de réguler la distribution des préformes 18 accumulées dans la première glissière 16A de défilement. Le doigt 48 de distribution est par exemple monté coulissant transversalement entre une position active dans laquelle il est étendu en travers du trajet des préformes 18 à l'extrémité 30A aval de la première glissière 16A de défilement pour bloquer le coulissement des préformes 18, et une position rétractée, représentée en traits pleins, dans laquelle il est situé à l'extérieur du trajet des préformes 18 pour permettre le glissement des préformes 18 en direction de l'aval. Le doigt 48 de distribution est par exemple commandé entre ses deux positions par un moteur électrique ou par un vérin 50 pneumatique.

Pour permettre de changer rapidement de format de préforme 18, l'invention propose d'équiper le dispositif 10 d'alimentation avec une deuxième source 14B de préformes 18 distincte de la première source 14A de préformes 18.

Cette deuxième source 14B de préformes 18 qui permet de délivrer à la file des préformes 18 orientées col en haut par une sortie 15B.

Cette deuxième source 14B de préformes 18 est par exemple identique à la première source 14A de préformes 18.

Elle comporte par exemple une trémie (non représentée), dans laquelle les préformes18 sont versées en vrac, et un dispositif (non représenté) pour redresser les préformes 18, tels que des rouleaux orienteurs.

En variante la deuxième source de préforme comporte des moyens pour aligner et redresser les préformes par centrifugation.

Les préformes 18 sont orientées col en haut et sont alignées en une file de manière à être ensuite délivrées à une deuxième glissière 16B de défilement qui transporte les préformes 18 jusqu'à une roue 17 d'alimentation de l'installation 12 de fabrication.

La deuxième glissière 16B de défilement présente une structure similaire à celle de la première glissière 16A de défilement.

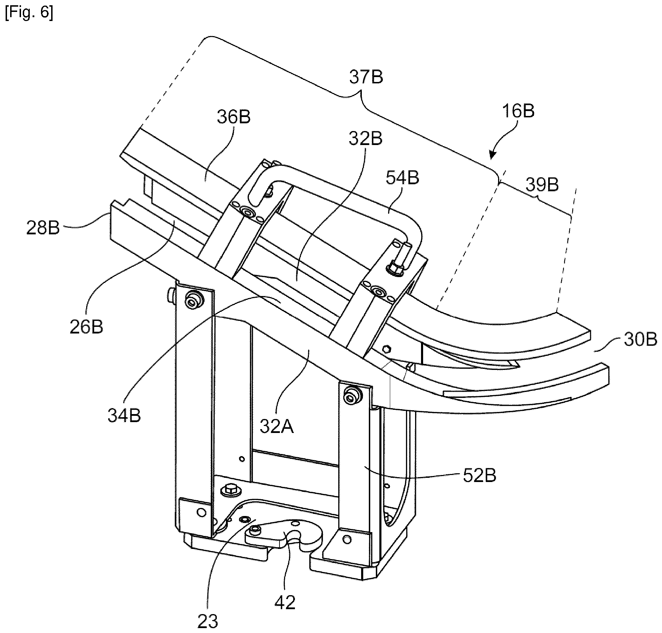

Dans l'exemple représenté à la figure 6, la deuxième glissière 16B de défilement comporte une fente 26B longitudinale qui s'étend depuis une extrémité 28B amont supérieure jusqu'à une extrémité 30B aval inférieure, l'extrémité 30B aval étant située en contrebas de l'extrémité 28B amont pour permettre aux préformes 18 de glisser vers l'extrémité 30B aval sous l'effet de la gravité. L'extrémité 28B amont est destinée à être raccordée à la sortie 15B de la deuxième source 14B de préformes 18 lorsque la deuxième glissière 16B de défilement est montée sur le dispositif 10 d'alimentation.

La deuxième glissière 16B de défilement présente une pente "γ" d'inclinaison, par exemple de 15° par rapport à un plan horizontal. Ceci permet aux préformes 18 de glisser sous l'effet de la gravité vers l'extrémité 30B aval inférieure de la glissière 16B de défilement.

En variante, la deuxième glissière de défilement s'étend dans un plan horizontal. La fente 26B est délimitée transversalement par deux rails 32B parallèles destinés à supporter de manière glissante la préforme 18 debout par sa collerette 24. A cet effet, les deux rails 32B présentent un écartement transversal qui est supérieur au diamètre externe du corps 20 des préformes 18, mais qui est inférieur au diamètre externe de la collerette 24.

Optionnellement, la distance d'écartement des deux rails 32B est ajustable par des moyens non représentés pour permettre à la deuxième glissière 16B de défilement de recevoir des séries de préformes 18 de modèles différents présentant des diamètres différents.

Lorsqu'une préforme 18 est reçue par la deuxième glissière 16B de défilement dans une position normale, la collerette 24 de chaque préforme 18 est supportée par deux chemins 34B de glissement formés chacun par une face supérieure bordant intérieurement chaque rail 32B, tandis que le corps 20 de chaque préforme 18 est pendant sous la deuxième glissière 16B de défilement par son poids. Dans cette position, la préforme 18 est dite "debout". Le col 22 de la préforme 18 est ainsi maintenu au-dessus des rails 32B dans un couloir central de défilement des cols 22 comme cela est représenté à la figure 3.

La deuxième glissière 16B de défilement comporte aussi une plaque 36B de guidage qui est agencée au droit de la fente 26B de défilement pour maintenir les préformes 18 défilant en position debout dans la deuxième glissière 16B de défilement par contact avec le bord d'extrémité libre, aussi appelé buvant, du col 22. A cette fin, la plaque 36B de guidage est agencée au-dessus des chemins 34B de glissement des rails 32B, à une distance légèrement supérieure à la hauteur d'un col 22, avec un jeu vertical suffisant pour permettre le coulissement des préformes 18 debout dans la deuxième glissière 16B de défilement.

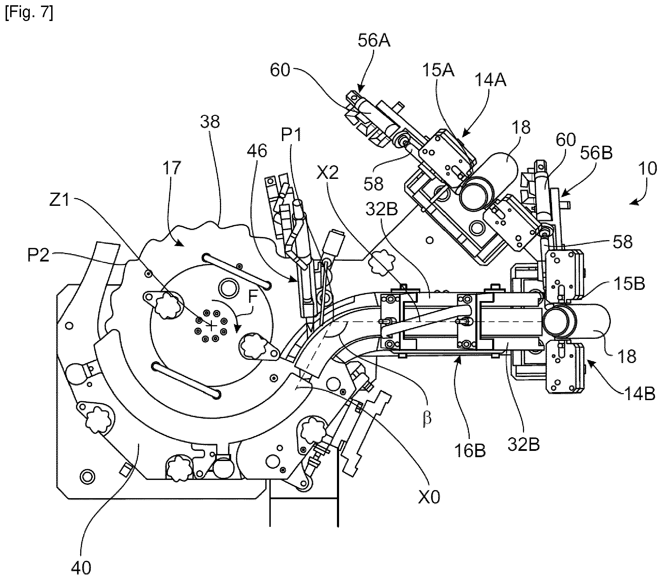

L'extrémité 30B aval de la deuxième glissière 16B de défilement débouche tangentiellement à la roue 17 d'alimentation en un point "P1" de tangence, comme représenté à la figure 7.

La deuxième glissière 16B de défilement présente ici un tronçon 37B d'extrémité amont de forme rectiligne. L'orientation de ce tronçon 37B d'extrémité amont est indiquée par le trait d'axe "X2" représenté à la figure 7.

Cependant, l'orientation "X2" du tronçon d'extrémité amont n'est pas ici tangente à la roue 17 d'alimentation. Pour permettre à l'extrémité 30B aval de la glissière 16B de défilement de déboucher tangentiellement à la roue 17 d'alimentation la deuxième glissière 16B de défilement présente donc un coude 39B. Le coude 39B forme ici un tronçon d'extrémité aval de la deuxième glissière 16B de défilement.

En variante, le coude forme un tronçon intermédiaire de la deuxième glissière de défilement.

Selon encore une autre variante, la deuxième glissière 16B de défilement est entièrement rectiligne et ne comporte pas de coude. Dans ce cas, l'orientation rectiligne de la deuxième glissière de défilement est agencée tangentiellement à la roue 17 d'alimentation.

De préférence, l'extrémité 30A aval de la première glissière 16A de défilement et l'extrémité 30B aval de la deuxième glissière 16B de défilement débouchent au même point "P1" de tangence avec la roue 17 d'alimentation, selon la même direction "X0".

En variante non représentée de l'invention, les deux glissières 16A, 16B de défilement débouchent chacune en un point "P1" de tangence associé, les deux points "P1" de tangence étant distincts.

Afin d'éviter que leurs tronçons d'extrémité aval n'interfèrent, la première glissière 16A de défilement et la deuxième glissière 16B de défilement sont chacune amovible indépendamment l'une de l'autre. Chacune parmi la première glissière 16A de défilement ou la deuxième glissière 16B de défilement peut ainsi être montée sur le bâti 19 du dispositif 10 d'alimentation uniquement lorsque l'autre glissière 16B, 16A de défilement amovible est démontée.

Pour faciliter leur montage, chacune des première glissière 16A de défilement et deuxième glissière 16B de défilement comporte un support 52A, 52B sur lequel les rails 32A, 32B de ladite glissière 16A, 16B de défilement sont fixés. Le support 52A, 52B est destiné à reposer sur le bâti 19 du dispositif 10 d'alimentation.

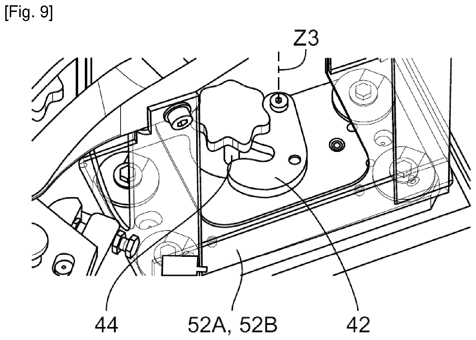

Chaque support 52A, 52B est destiné à être fixé au bâti 19 du dispositif 10 d'alimentation. Avantageusement, chaque support 52A, 52B comporte des moyens de fixation rapide par accrochage sur le bâti 19, tel qu'un dispositif à grenouillère ou une sauterelle. Comme illustré en détails à la figure 9, chaque support 52A, 52B est par exemple ici fixé au moyen de crochets 42 pivotant autour d'un axe "Z3" vertical, chaque crochet 42 étant susceptible d'être accroché à une tige d'une vis 44. La vis 44 est susceptible d'être vissée pour serrer et fixer le crochet 42, et donc le support 52A, 52B, au bâti 19, ou au contraire dévissée pour desserrer le crochet 42 et permettre son pivotement pour démonter le contrerail 40. La vis 44 présente avantageusement une poignée permettant son vissage et son dévissage à main nue par un opérateur.

Pour faciliter leur manipulation, chaque glissière 16A, 16B de défilement est munie d'une poignée 54A, 54B qui permet à un utilisateur de la saisir facilement pour la positionner ou la retirer.

Par ailleurs, la première source 14A de préformes 18 et la deuxième source 14B de préformes 18 sont agencés à des emplacements décalés angulairement par rapport à l'axe de la roue 17 d'alimentation. La première source 14A et la deuxième source 14B délivrent donc les préformes 18 selon une orientation différente. Or, les deux glissières 16A, 16B de défilement doivent pouvoir distribuer les préformes 18 à la roue 17 d'alimentation selon la même orientation tangentielle "X0".

De ce fait, la première glissière 16A de défilement, en position montée, présente une orientation différente de la deuxième glissière 16B de défilement, en position montée. Au moins la deuxième glissière 16B de défilement présentant un coude 39B dont l'angle "β" permet à son extrémité 30B aval de déboucher tangentiellement à la roue 17 d'alimentation, selon la direction "X0". Cet angle "β" est mesuré entre la droite "X2" formée par le tronçon d'extrémité amont rectiligne et l'orientation "X0" avec laquelle les préformes 18 sortent de la deuxième glissière 16B de défilement.

Dans l'exemple représenté aux figures, la deuxième glissière 16B de défilement présente un coude 39B dont l'angle "β" permet à son extrémité 30B aval de déboucher tangentiellement à la roue 17 d'alimentation, selon la direction "X0".

L'angle "β" dudit coude 39B étant différent de celui du coude 39A de la première glissière 16A de défilement. Dans l'exemple représenté aux figures, le coude 39A de la première glissière 16A de défilement forme un angle "α" de 135°, tandis que le coude 39B de la deuxième glissière 16B de défilement forme un angle "β" d'environ 90°.

En outre, le dispositif 46 de cadencement est commun à la première glissière 16A de défilement et à la deuxième glissière 16B de défilement. Ceci permet de réduire les coûts de fabrication du dispositif 10 d'alimentation. Le dispositif 46 de cadencement, ici le doigt 48 de distribution, est donc porté par le bâti 19 du dispositif 10 d'alimentation et non par le support 52A, 52B de la glissière 16A, 16B de défilement. Le dispositif 46 de cadencement est ainsi fixé à demeure au bâti 19, et il n'est pas nécessaire de le démonter, ni même d'en modifier la position lors d'un changement de glissière 16A, 16B de défilement.

Les sources 14A, 14B de préformes 18 sont destinées à pouvoir être approvisionnées en préformes 18 même lorsque la glissière 16A, 16B de défilement associée n'est pas montée sur le bâti 19. Pour éviter que les préformes 18 ne continuent à sortie de chaque source 14A, 14B de préformes en l'absence de glissière 16A, 16B de défilement pour les réceptionner, chaque source 14A, 14B de préformes 18 est munie d'un dispositif 56A, 56B de blocage associé qui est commandé entre un état fermé qui permet de bloquer les préformes 18 en amont de la sortie 15A, 15B associée et un état ouvert qui permet aux préformes 18 de glisser vers la glissière 16A, 16B de défilement associée en position montée.

Chaque dispositif 56A, 56B de blocage comporte ici un obstacle, tel qu'un doigt 58 de blocage similaire au doigt 48 de distribution, commandé entre une position rétractée correspondant à son état ouvert et une position étendue en travers du trajet des préformes 18 correspondant à son état fermé. Le doigt 58 de blocage est par exemple commandé entre ses deux positions par un moteur électrique ou par un vérin 60 pneumatique.

Avantageusement, la première source 14A de préformes 18, respectivement la deuxième source 14B de préformes 18, est susceptible de distribuer des préformes 18 de différents modèles. De ce fait, la première source 14A de préformes 18, respectivement la deuxième source 14B de préformes 18, peut être jointe avec plusieurs premières glissières 16A de défilement, respectivement plusieurs deuxièmes glissières 16B de défilement, associées présentant un écartement différent et un coude 39A, 39B de même angle "α, β".

Lors de l'utilisation du dispositif 10 d'alimentation, la première glissière 16A de défilement est montée sur le bâti 19 tandis que la deuxième glissière 16B de défilement est ôtée, comme représenté aux figures 4 et 5. La première source 14A de préformes 18 délivre des préformes 18 d'un premier format. Pour ce faire, le dispositif 56A de blocage associé à la première source 14A de préformes 18 est dans son état ouvert. La roue 17 d'alimentation tourne pour recevoir successivement chaque préforme 18 délivrée tangentiellement par la première glissière 16A de défilement, selon la direction "X0". Chaque préforme 18 est reçu dans une encoche 38 associée grâce au fonctionnement du dispositif 46 de cadencement.

Lorsqu'on souhaite changer de format de préformes 18, il est possible de préparer la deuxième source 14B de préformes 18 pendant que l'installation 12 de fabrication est alimentée avec la première source 14A de préformes 18. L'installation 12 de fabrication fonctionne donc toujours pendant cette opération de préparation. La préparation consiste à charger les préformes 18 du deuxième format dans la deuxième source 14B de préformes 18. Le dispositif 56B de blocage associé à la deuxième source 14B étant dans son état fermé, les préformes 18 sont alignées et redressée à la sortie de la deuxième source 14B, prêtes à sortir.

L'installation 12 de fabrication est ensuite mise hors production pour permettre de changer certains éléments associés au nouveau format de préforme 18. Lors de cet arrêt, le dispositif 56A de blocage associé à la première source 14A de préformes 18 est commandé dans sa position fermée pour arrêter l'arrivée des préformes 18 dans la première glissière 16A de défilement. Une fois que la première glissière 16A de défilement a été purgée des préformes 18 qu'elle contient, elle est démontée et ôtée du bâti 19.

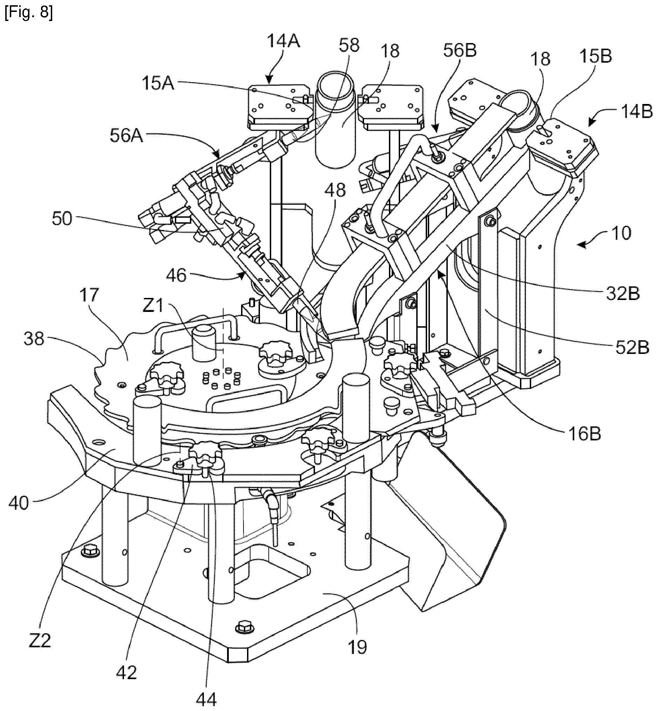

La deuxième glissière 16B de défilement est ensuite montée sur le bâti 19 de manière à connecter la sortie 15B de la deuxième source 14B de préformes 18 avec le point "P1" de tangence avec la roue 17 d'alimentation, comme illustré aux figures 7 et 8. Le contrerail 40 est aussi changé si cela s'avère nécessaire.

Une fois cette opération de changement effectuée, l'installation 12 de fabrication est remise en production. Le dispositif 56B de blocage associé à la deuxième source 14B de préformes 18 est alors commandé dans sa position ouverte pour permettre aux préformes 18 de glisser vers l'extrémité 30B aval de la deuxième glissière 16B de défilement. Le dispositif 46 de cadencement, qui n'a pas été modifié durant l'opération de changement, est mis en marche pour distribuer chaque préforme 18 dans une encoche 38 associée de la roue 17 d'alimentation.

Pendant le fonctionnement de l'installation 12 de fabrication, la première source 14A de préformes 18 peut être purgée pour recevoir un nouveau lot de préformes 18 en vue d'un prochain changement de format.

En variante, la première source 14A de préformes 18 n'est pas purgée lorsque le même format de préforme 18 doit être réutilisé par la suite. En revanche, la première source 14A peut être réapprovisionnée en préformes 18 en vue de la prochaine utilisation si cela est nécessaire.

Le dispositif 10 d'alimentation réalisé selon les enseignements de l'invention permet ainsi de réduire le temps d'arrêt de l'installation 12 de fabrication lors d'un changement de format de préformes 18 en évitant d'avoir à purger la source de préformes 18 pendant la mise hors production de l'installation 12 de fabrication.

## Revendications

1. Dispositif (10) d'alimentation de préformes (18), notamment de préformes en matériau thermoplastique destinées à être conformées en récipients, adapté pour des préformes (18) comportant une collerette (24), le dispositif (10) d'alimentation comportant :
- une première source (14A) de préformes ;
- une première glissière (16A) de défilement des préformes (18) comportant deux rails (32A) de glissement destinés à supporter les préformes (18) debout par leur collerette (24), la première glissière (16A) de défilement étant alimentée par la première source (16A) de préformes ;
- une roue (17) d'alimentation rotative sur un bâti (19) fixe du dispositif (10) d'alimentation qui comporte des encoches (38) de réception d'une préforme (18) qui sont réparties à sa périphérie et dont chacune est configurée pour recevoir une préforme (18) arrivant par une extrémité (30A) aval de la première glissière (16A) de défilement orientée tangentiellement à la roue (17) d'alimentation en un point (P1) de tangence ;
**caractérisé en ce que** le dispositif (10) d'alimentation comporte aussi :
- une deuxième source (14B) de préformes distincte de la première source (14A) de préformes ;
- une deuxième glissière (16B) de défilement comportant deux rails (32B) de glissement destinés à supporter les préformes (18) debout par leur collerette (24), la deuxième glissière (16B) de défilement étant alimentée par la deuxième source (14B) de préformes, une extrémité aval (30B) de la deuxième glissière (16B) de défilement étant orientée tangentiellement à la roue (17) d'alimentation en un point (P1) de tangence.

2. Dispositif (10) d'alimentation selon la revendication précédente, **caractérisé en ce que** l'extrémité (30A) aval de la première glissière (16A) de défilement et l'extrémité (30B) aval de la deuxième glissière (16B) de défilement débouchent au même point (P1) de tangence avec la roue (17) d'alimentation.

3. Dispositif (10) d'alimentation selon la revendication précédente, **caractérisé en ce que** la première glissière (16A) de défilement et la deuxième glissière (16B) de défilement sont chacune amovible, chacune pouvant être montée sur le bâti (19) uniquement lorsque l'autre est démontée afin d'éviter que leurs extrémités (30A, 30B) aval n'interfèrent.

4. Dispositif (10) d'alimentation selon la revendication précédente, **caractérisé en ce que** chacune des première glissière (16A) de défilement et deuxième glissière (16B) de défilement comporte un support (52A, 52B) sur lequel les rails (32A, 32B) de ladite glissière (16A, 16B) de défilement sont fixés, le support (52A, 52B) étant destiné à être fixé au bâti (19).

5. Dispositif (10) d'alimentation selon l'une quelconque des revendications 3 ou 4, **caractérisé en ce que** la première glissière (16A) de défilement et la deuxième glissière (16B) de défilement présentent, dans leurs positions montées respectives, des orientations différentes par rapport à la roue (17) d'alimentation, la deuxième glissière (16B) de défilement présentant un coude (39B) présentant un angle (β) permet à son extrémité (30B) aval de déboucher tangentiellement à la roue (17) d'alimentation.

6. Dispositif (10) d'alimentation selon la revendication précédente, **caractérisé en ce que** la deuxième glissière (16B) de défilement présente un coude (39A) présentant un angle (α) qui permet à son extrémité (30A) aval de déboucher tangentiellement à la roue (17) d'alimentation, l'angle (α) dudit coude (39A) étant différent de l'angle (β) du coude (39B) de la deuxième glissière (16B) de défilement.

7. Dispositif (10) d'alimentation selon l'une quelconque des revendications 3 à 6, **caractérisé en ce que** chaque glissière (16A, 16B) de défilement comporte des moyens de fixation rapide par accrochage sur le bâti (19) du dispositif (10) d'alimentation.

8. Dispositif (10) d'alimentation selon l'une quelconque des revendications précédentes, **caractérisé en ce que** chaque source (14A, 14B) de préformes (18) est munie d'un dispositif (56A, 56B) de blocage associé qui est commandé entre un état fermé qui permet de bloquer les préformes (18) en amont d'une sortie (15A, 15B) de ladite source (14A, 14B) de préformes et un état ouvert qui permet aux préformes (18) de glisser vers la glissière (16A, 16B) de défilement associée en position montée.

9. Dispositif (10) d'alimentation selon la revendication précédente, **caractérisé en ce que** le dispositif (56A, 56B) de blocage est formé par un obstacle commandé entre une position rétractée correspondant à son état ouvert et une position étendue en travers du trajet des préformes correspondant à son état fermé.

10. Dispositif (10) d'alimentation selon l'une quelconque des revendications 2 à 9, **caractérisé en ce que** la première source (14A) de préformes, respectivement la deuxième source (14B) de préformes, est susceptible de distribuer des préformes (18) de différents modèles, la première source (14A) de préformes, respectivement la deuxième source (14B) de préformes, pouvant être adaptée avec plusieurs premières glissières (16A) de défilement, respectivement plusieurs deuxièmes glissières (16B) de défilement, associées présentant un écartement différent et un coude (39A, 39B) de même angle.

11. Dispositif (10) d'alimentation selon l'une quelconque des revendications précédentes, **caractérisé en ce qu'**il comporte un dispositif (46) de cadencement de la distribution des préformes (18) à la roue (17) d'alimentation au niveau du point (P1) de tangence, le dispositif (46) de cadencement étant commun à la première glissière (16A) de défilement et à la deuxième glissière (16B) de défilement.

12. Dispositif (10) d'alimentation selon l'une quelconque des revendications précédentes, **caractérisé en ce que** les glissières (16A, 16B) de défilement sont inclinées de manière que les préformes (18) se déplacent vers leur extrémité (30A, 30B) aval respective sous l'effet de la gravité.

13. Dispositif (10) d'alimentation selon l'une quelconque des revendications 1 à 11, **caractérisé en ce que** les préformes (18) se déplacent vers l'extrémité (30A, 30B) aval de chaque glissière (16A, 16B) de défilement sous l'effet de moyens de poussée des préformes (18).

14. Procédé de changement d'une glissière (16A, 16B) de défilement d'un dispositif (10) d'alimentation selon l'une quelconque des revendications 8 à 13, dans lequel l'une ou l'autre des glissières (16A, 16B) de défilement est montée sur le dispositif (10) d'alimentation, **caractérisé en ce qu'**il comporte :
- une première étape de blocage lors de laquelle le dispositif (56B) de blocage associé à ladite glissière (16B) de défilement montée est commandé dans sa position fermée pour arrêter l'arrivée des préformes (18),
- puis, une fois que ladite glissière (16B) de défilement montée a été purgée des préformes (18) qu'elle contient, elle est démontée lors d'une deuxième étape de démontage,
- l'autre glissière (16A) de défilement est ensuite montée lors d'une étape de remplacement,
- puis, lors d'une étape de déblocage, le dispositif (56A) de blocage associé à la glissière (16A) de défilement désormais montée est alors commandé dans sa position ouverte pour permettre aux préformes (18) de glisser vers son extrémité (30A) aval.

## Patentansprüche

1. Vorrichtung (10) zum Zuführen von Vorformlingen (18), insbesondere von Vorformlingen aus thermoplastischem Material, die dazu bestimmt sind, zu Behältern umgeformt zu werden, welche für Vorformlinge (18) ausgelegt ist, die einen Bund (24) aufweisen, wobei die Vorrichtung (10) zum Zuführen aufweist:
- eine erste Quelle (14A) von Vorformlingen;
- eine erste Gleitlaufbahn (16A) für die Vorformlinge (18), die zwei Gleitschienen (32A) aufweist, die dazu bestimmt sind, die Vorformlinge (18) aufrecht an ihrem Bund (24) zu tragen, wobei die erste Gleitlaufbahn (16A) von der ersten Quelle (16A) von Vorformlingen versorgt wird;
- ein Zuführrad (17), das an einem ortsfesten Gestell (19) der Vorrichtung (10) zum Zuführen drehbar angebracht ist und das Einkerbungen (38) zur Aufnahme eines Vorformlings (18) aufweist, die auf seinem Umfang verteilt sind und von denen jede dafür ausgelegt ist, einen Vorformling (18), der über ein stromabwärtiges Ende (30A) der tangential zum Zuführrad (17) ausgerichteten ersten Gleitlaufbahn (16A) ankommt, in einem Berührungspunkt (P1) aufzunehmen;
**dadurch gekennzeichnet, dass** die Vorrichtung (10) zum Zuführen außerdem aufweist:
- eine zweite Quelle (14B) von Vorformlingen, die von der ersten Quelle (14A) von Vorformlingen verschieden ist;
- eine zweite Gleitlaufbahn (16B), die zwei Gleitschienen (32B) aufweist, die dazu bestimmt sind, die Vorformlinge (18) aufrecht an ihrem Bund (24) zu tragen, wobei die zweite Gleitlaufbahn (16B) von der zweiten Quelle (14B) von Vorformlingen versorgt wird, wobei ein stromabwärtiges Ende (30B) der zweiten Gleitlaufbahn (16B) tangential zum Zuführrad (17) in einem Berührungspunkt (P1) ausgerichtet ist.

2. Vorrichtung (10) zum Zuführen nach dem vorhergehenden Anspruch, **dadurch gekennzeichnet, dass** das stromabwärtige Ende (30A) der ersten Gleitlaufbahn (16A) und das stromabwärtige Ende (30B) der zweiten Gleitlaufbahn (16B) an demselben Berührungspunkt (P1) mit dem Zuführrad (17) münden.

3. Vorrichtung (10) zum Zuführen nach dem vorhergehenden Anspruch, **dadurch gekennzeichnet, dass** die erste Gleitlaufbahn (16A) und die zweite Gleitlaufbahn (16B) jeweils demontierbar sind, wobei jede nur dann am Gestell (19) montiert werden kann, wenn die andere demontiert ist, um zu vermeiden, dass ihre stromabwärtigen Ende (30A, 30B) in Konflikt geraten.

4. Vorrichtung (10) zum Zuführen nach dem vorhergehenden Anspruch, **dadurch gekennzeichnet, dass** die erste Gleitlaufbahn (16A) und die zweite Gleitlaufbahn (16B) jeweils eine Abstützung (52A, 52B) aufweisen, auf der die Schienen (32A, 32B) der Gleitlaufbahn (16A, 16B) befestigt sind, wobei die Abstützung (52A, 52B) dazu bestimmt ist, am Gestell (19) befestigt zu werden.

5. Vorrichtung (10) zum Zuführen nach einem der Ansprüche 3 oder 4, **dadurch gekennzeichnet, dass** die erste Gleitlaufbahn (16A) und die zweite Gleitlaufbahn (16B) in ihren jeweiligen montierten Positionen unterschiedliche Ausrichtungen bezüglich des Zuführrades (17) aufweisen, wobei die zweite Gleitlaufbahn (16B) ein Bogenstück (39B) aufweist, das einen Winkel (β) aufweist, welcher ermöglicht, dass ihr stromabwärtiges Ende (30B) tangential zum Zuführrad (17) mündet.

6. Vorrichtung (10) zum Zuführen nach dem vorhergehenden Anspruch, **dadurch gekennzeichnet, dass** die zweite Gleitlaufbahn (16B) ein Bogenstück (39A) aufweist, das einen Winkel (α) aufweist, welcher ermöglicht, dass ihr stromabwärtiges Ende (30A) tangential zum Zuführrad (17) mündet, wobei der Winkel (α) des Bogenstücks (39A) vom Winkel (β) des Bogenstücks (39B) der zweiten Gleitlaufbahn (16B) verschieden ist.

7. Vorrichtung (10) zum Zuführen nach einem der Ansprüche 3 bis 6, **dadurch gekennzeichnet, dass** jede Gleitlaufbahn (16A, 16B) Mittel zur schnellen Befestigung durch Anhaken am Gestell (19) der Vorrichtung (10) zum Zuführen aufweist.

8. Vorrichtung (10) zum Zuführen nach einem der vorhergehenden Ansprüche, **dadurch gekennzeichnet, dass** jede Quelle (14A, 14B) von Vorformlingen (18) mit einer zugeordneten Blockiervorrichtung (56A, 56B) ausgestattet ist, die zwischen einem geschlossenen Zustand, der es ermöglicht, die Vorformlinge (18) stromaufwärts eines Ausgangs (15A, 15B) dieser Quelle (14A, 14B) von Vorformlingen zu blockieren, und einem geöffneten Zustand, der es ermöglicht, dass die Vorformlinge (18) in Richtung der zugeordneten Gleitlaufbahn (16A, 16B) in der montierten Position gleiten, gesteuert wird.

9. Vorrichtung (10) zum Zuführen nach dem vorhergehenden Anspruch, **dadurch gekennzeichnet, dass** die Blockiervorrichtung (56A, 56B) von einem Hindernis gebildet wird, das zwischen einer zurückgezogenen Position, die ihrem geöffneten Zustand entspricht, und einer sich durch die Trajektorie der Vorformlinge hindurch erstreckenden Position, die ihrem geschlossenen Zustand entspricht, gesteuert wird.

10. Vorrichtung (10) zum Zuführen nach einem der Ansprüche 2 bis 9, **dadurch gekennzeichnet, dass** die erste Quelle(14A) von Vorformlingen bzw. die zweite Quelle (14B) von Vorformlingen Vorformlinge (18) unterschiedlicher Modelle verteilen kann, wobei die erste Quelle(14A) von Vorformlingen bzw. die zweite Quelle (14B) von Vorformlingen mit zugeordneten mehreren ersten Gleitlaufbahnen (16A) bzw. mehreren zweiten Gleitlaufbahnen (16B) eingerichtet werden kann, die einen unterschiedlichen Abstand und ein Bogenstück (39A, 39B) mit demselben Winkel aufweisen.

11. Vorrichtung (10) zum Zuführen nach einem der vorhergehenden Ansprüche, **dadurch gekennzeichnet, dass** sie eine Vorrichtung (46) zur Zeitsteuerung der Verteilung der Vorformlinge (18) auf das Zuführrad (17) am Berührungspunkt (P1) aufweist, wobei die Vorrichtung (46) zur Zeitsteuerung der ersten Gleitlaufbahn (16A) und der zweiten Gleitlaufbahn (16B) gemeinsam ist.

12. Vorrichtung (10) zum Zuführen nach einem der vorhergehenden Ansprüche, **dadurch gekennzeichnet, dass** die Gleitlaufbahnen (16A, 16B) geneigt sind, so dass sich die Vorformlinge (18) unter der Wirkung der Schwerkraft in Richtung ihres jeweiligen stromabwärtigen Endes (30A, 30B) bewegen.

13. Vorrichtung (10) zum Zuführen nach einem der Ansprüche 1 bis 11, **dadurch gekennzeichnet, dass** sich die Vorformlinge (18) unter der Wirkung von Mitteln zum Schieben der Vorformlinge (18) in Richtung des stromabwärtigen Endes (30A, 30B) der jeweiligen Gleitlaufbahn (16A, 16B) bewegen.

14. Verfahren zum Wechseln einer Gleitlaufbahn (16A, 16B) einer Vorrichtung (10) zum Zuführen nach einem der Ansprüche 8 bis 13, wobei die eine oder die andere der Gleitlaufbahnen (16A, 16B) an der Vorrichtung (10) zum Zuführen montiert ist, **dadurch gekennzeichnet, dass** es umfasst:
- einen ersten Schritt des Blockierens, in dem die der montierten Gleitlaufbahn (16B) zugeordnete Blockiervorrichtung (56B) in ihre geschlossene Position gesteuert wird, um das Ankommen der Vorformlinge (18) zu stoppen,
- danach wird, sobald die montierte Gleitlaufbahn (16B) von den Vorformlingen (18), die sie enthält, entleert worden ist, diese in einem zweiten Schritt des Demontierens demontiert,
- die andere Gleitlaufbahn (16A) wird anschließend in einem Schritt des Ersetzens montiert,
danach wird in einem Schritt des Freigebens die der nunmehr montierten Gleitlaufbahn (16A) zugeordnete Blockiervorrichtung (56A) dann in ihre geöffnete Position gesteuert, um zu ermöglichen, dass die Vorformlinge (18) in Richtung ihres stromabwärtigen Endes (30A) gleiten.

## Claims

1. Device (10) for supplying preforms (18), in particular preforms made of thermoplastic material intended to be shaped into containers, suitable for preforms (18) having a collar (24), the supply device (10) having:
- a first source (14A) of preforms;
- a first file-forming slide (16A) for the preforms (18), having two sliding rails (32A) intended to support the preforms (18) upright by their collar (24), the first file-forming slide (16A) being supplied by the first source (16A) of preforms;
- a supply wheel (17) rotating on a fixed frame (19) of the supply device (10), which has notches (38) for receiving a preform (18) that are distributed at its periphery and each of which is configured to receive a preform (18) arriving via a downstream end (30A) of the first file-forming slide (16A) oriented tangentially to the supply wheel (17) at a point (P1) of tangency; **characterized in that** the supply device (10) also has:
- a second source (14B) of preforms, distinct from the first source (14A) of preforms;
- a second file-forming slide (16B) having two sliding rails (32B) intended to support the preforms (18) upright by their collar (24), the second file-forming slide (16B) being supplied by the second source (14B) of preforms, a downstream end (30B) of the second file-forming slide (16B) being oriented tangentially to the supply wheel (17) at a point (P1) of tangency.

2. Supply device (10) according to the preceding claim, **characterized in that** the downstream end (30A) of the first file-forming slide (16A) and the downstream end (30B) of the second file-forming slide (16B) open at the same point (P1) of tangency with the supply wheel (17).

3. Supply device (10) according to the preceding claim, **characterized in that** the first file-forming slide (16A) and the second file-forming slide (16B) are each removable, each being able to be mounted on the frame (19) only when the other is removed in order to prevent their downstream ends (30A, 30B) from interfering with one another.

4. Supply device (10) according to the preceding claim, **characterized in that** each of the first file-forming slide (16A) and the second file-forming slide (16B) has a support (52A, 52B) on which the rails (32A, 32B) of said file-forming slide (16A, 16B) are fastened, the support (52A, 52B) being intended to be fastened to the frame (19).

5. Supply device (10) according to either one of Claims 3 and 4, **characterized in that** the first file-forming slide (16A) and the second file-forming slide (16B) have, in their respective mounted positions, different orientations with respect to the supply wheel (17), the second file-forming slide (16B) having a bend (39B) having an angle (β) that allows its downstream end (30B) to open tangentially to the supply wheel (17).

6. Supply device (10) according to the preceding claim, **characterized in that** the second file-forming slide (16B) has a bend (39A) having an angle (α) that allows its downstream end (30A) to open tangentially to the supply wheel (17), the angle (α) of said bend (39A) being different from the angle (β) of the bend (39B) of the second file-forming slide (16B).

7. Supply device (10) according to any one of Claims 3 to 6, **characterized in that** each file-forming slide (16A, 16B) has means for quick fastening by hooking onto the frame (19) of the supply device (10).

8. Supply device (10) according to any one of the preceding claims, **characterized in that** each source (14A, 14B) of preforms (18) is provided with an associated blocking device (56A, 56B) that is driven between a closed state that makes it possible to block the preforms (18) upstream of an outlet (15A, 15B) of said source (14A, 14B) of preforms and an open state that allows the preforms (18) to slide towards the associated file-forming slide (16A, 16B) in the mounted position.

9. Supply device (10) according to the preceding claim, **characterized in that** the blocking device (56A, 56B) is formed by an obstacle driven between a retracted position corresponding to its open state and a position extended across the path of the preforms corresponding to its closed state.

10. Supply device (10) according to any one of Claims 2 to 9, **characterized in that** the first source (14A) of preforms, respectively the second source (14B) of preforms, is able to dispense preforms (18) of different models, the first source (14A) of preforms, respectively the second source (14B) of preforms, being able to be adapted with a plurality of associated first file-forming slides (16A), respectively a plurality of associated second file-forming slides (16B), having a different spacing and a bend (39A, 39B) of the same angle.

11. Supply device (10) according to any one of the preceding claims, **characterized in that** it has a device (46) for timing the dispensing of the preforms (18) to the supply wheel (17) at the point (P1) of tangency, the timing device (46) being common to the first file-forming slide (16A) and the second file-forming slide (16B).

12. Supply device (10) according to any one of the preceding claims, **characterized in that** the file-forming slides (16A, 16B) are inclined such that the preforms (18) move towards their respective downstream end (30A, 30B) under the effect of gravity.

13. Supply device (10) according to any one of Claims 1 to 11, **characterized in that** the preforms (18) move towards the downstream end (30A, 30B) of each file-forming slide (16A, 16B) under the effect of means for pushing the preforms (18).

14. Method for changing a file-forming slide (16A, 16B) of a supply device (10) according to any one of Claims 8 to 13, wherein one or the other of the file-forming slides (16A, 16B) is mounted on the supply device (10), **characterized in that** it involves:
- a first, blocking step during which the blocking device (56B) associated with said mounted file-forming slide (16B) is driven into its closed position so as to stop the arrival of the preforms (18),
- then, once said mounted file-forming slide (16B) has been purged of the preforms (18) that it contains, it is removed during a second, removal step,
- the other file-forming slide (16A) is then mounted during a replacement step,
- then, during an unblocking step, the blocking device (56A) associated with the file-forming slide (16A) that is now mounted is then driven into its open position so as to allow the preforms (18) to slide towards its downstream end (30A).
